# EUROPEAN PATENT APPLICATION

(11) **EP 4 741 029 A1**
(43) Date of publication of application: **13.05.2026**
(21) Application number: 25179396.4
(22) Date of filing: 28.05.2025
(51) Int. Cl.: A63F 13/5372, A63F 13/812

(54) **GRAPHICAL OVERLAY METHOD**

(30) Priority: 07.11.2024 GB 202416418; 07.11.2024 US 202418939965
(71) Applicant: Mi Hiepa Scout Limited, Manchester M15 4PY (GB)
(72) Inventor: THATCHER, Gareth, Manchester, M15 4PY (GB); ETCHES, Andy, Manchester, M15 4PY (GB); DICKINSON, Adam, Manchester, M15 4PY (GB)
(74) Representative: Reddie & Grose LLP

(57) **Abstract**

The present disclosure provides a method of providing a graphical overlay on a display of a computing device to a user in a gameplay environment as well as a corresponding device and non-transitory computer-readable medium. The gameplay environment comprises a plurality of non-user players, a user player under the control of the user, and a virtual object that the user player can interact with. The method comprises providing, on the display of the computing device, a first marker indicating a direction from which a virtual object will be received by a user player in the gameplay environment, and providing, on the display of the computing device, a second marker indicating a direction in which the virtual object is to be passed by the user player in the gameplay environment.

## Description

### FIELD OF INVENTION

The present disclosure relates generally to graphical overlays. More specifically, aspects of the disclosure pertain to methods and systems for providing graphical overlays in a gameplay environment. The disclosure may be particularly applicable to virtual reality and mixed reality applications that allow users to participate in and interact with recreated sports scenarios while receiving visual guidance and feedback.

### BACKGROUND

Virtual reality (VR) and mixed reality (MR) technologies have advanced significantly in recent years, offering increasingly immersive and interactive experiences across various domains. In the realm of sports and gaming, these technologies have opened up new possibilities for simulating real-world athletic events and providing users with engaging, interactive experiences. Traditional sports video games have long allowed players to control virtual athletes in simulated matches, but these games often lack the level of immersion and authenticity that VR and MR can provide.

One area of particular interest is the recreation of specific moments or plays from real sporting events. While highlight reels and video replays allow fans to relive exciting moments, they lack interactivity. Existing sports simulation games may offer generic scenarios or fictional matches, but they typically do not recreate specific, real-world plays with a high degree of accuracy.

Current VR and MR sports experiences face several challenges in providing truly immersive and authentic simulations of real-world sporting moments. One significant issue is that current systems often struggle to provide clear and non-intrusive guidance to users within the virtual environment. This can make it difficult for players to understand their objectives, anticipate game events, or make split-second decisions as they would in a real sporting scenario.

It has been appreciated that graphical overlays in a gameplay environment that overcome one or more of these problems are needed, and that such graphical overlays may also address similar problems in other gameplay fields outside of VR and MR.

### SUMMARY OF INVENTION

The invention is defined in the independent claims. Embodiments of the invention are set out in the dependent claims.

In a first aspect, a method of providing a graphical overlay on a display of a computing device to a user in a gameplay environment is provided. The method comprises: providing, on the display of the computing device, a first marker indicating a direction from which a virtual object will be received by a user player in the gameplay environment; and providing, on the display of the computing device, a second marker indicating a direction in which the virtual object is to be passed by the user player in the gameplay environment.

This method provides clear visual guidance to the user, enhancing their ability to anticipate and quickly respond to gameplay events. The first and second markers create an intuitive interface that improves user engagement and performance within the gameplay environment.

The first marker may comprise a first arrow to indicate a direction from which the virtual object will be received.

The first arrow may point inwards towards the user player from the direction in which the virtual object will be received; or the first arrow may point outwards from the user player to the direction in which the virtual object will be received.

The second marker may comprise a second arrow to indicate a direction in which the virtual object will be received.

The second arrow may point inwards towards the user player in the direction in which the virtual object is to be passed; or the second arrow may point outwards from the user player in the direction in which the virtual object is to be passed.

Utilizing arrows as the first and/or second marker offers a simple and universally understood directional indicator, reducing cognitive load on the user and allowing for quick comprehension of incoming object trajectories.

The first marker may comprise a first ring centred on the user player, the first ring having an indicator portion to indicate a direction from which the virtual object is to be received, the indicator portion being visually distinguishable from the remainder of the first ring.

The use of a ring with a visually distinct indicator portion provides a 360-degree awareness tool for the user, allowing for quick and accurate perception of object trajectories from any direction.

The indicator portion of the first ring may be visually distinguishable from the remainder of the first ring based on one or more of a difference in colour, thickness, transparency, and brightness.

These visual differentiation techniques enhance the clarity and readability of the indicator, ensuring that users can quickly identify the relevant information even in complex or fast-paced gameplay scenarios.

An interface between the indicator portion of the first ring and the remainder of the first ring may be a gradation in one or more of colour, thickness, transparency, and brightness.

The gradation creates a smooth visual transition, providing further information about the precise point on the first ring at which they are looking relative to the indicator portion.

A left hand side of the first ring relative to the indicator portion of the first ring may be distinguished from a right hand side of the first ring relative to the indicator portion of the first ring by one or more of a difference in colour, thickness, transparency, and brightness between the left hand side and the right hand side.

This additional visual distinction aids in rapid directional interpretation, allowing users to quickly determine the direction they are looking and the side from which the virtual object will approach.

The second marker may comprise a second ring centred on the user player, the second ring having an indicator portion to indicate a direction in which the virtual object is to be passed, the indicator portion being visually distinguishable from the remainder of the second ring.

Utilizing a similar ring structure for both incoming and outgoing directional indicators creates a consistent and intuitive visual language within the user interface.

The indicator portion of the second ring may be visually distinguishable from the remainder of the second ring based on one or more of a difference in colour, thickness, transparency, and brightness.

These visual differentiation techniques applied to the second ring ensure clear and quick readability of the passing direction, facilitating improved user response times and accuracy.

An interface between the indicator portion of the second ring and the remainder of the second ring may be a gradation in one or more of colour, thickness, transparency, and brightness.

The gradation in the second ring, similar to that in the first ring, provides further information about the precise point on the second ring at which they are looking relative to the indicator portion.

A left hand side of the second ring relative to the indicator portion of the second ring may be distinguished from a right hand side of the second ring relative to the indicator portion of the second ring by one or more of a difference in colour, thickness, transparency, and brightness between the left hand side and the right hand side.

This left-right distinction in the second ring aids in rapid interpretation of the precise passing direction, allowing for more accurate user inputs and allowing users to quickly determine the direction in which to pass the visual object.

The first ring may be concentrically within the second ring, or the second ring may be concentrically within the first ring.

This concentric arrangement of the rings provides a compact and organized visual representation of both incoming and outgoing directional information, maximizing screen space efficiency while maintaining clarity.

The direction from which a virtual object will be received may be a direction to a non-user player from whom the virtual object will be received.

Linking the directional indicators to specific non-user players enhances the realism and immersion of the gameplay experience, allowing users to better anticipate and respond to in-game events.

The first marker may move to track the direction of the non-user player from whom the virtual object will be received as that non-user player moves relative to the user player.

This dynamic tracking feature ensures that the directional guidance remains accurate and relevant even as the gameplay situation evolves, supporting more fluid and responsive user interactions and allowing users to better anticipate and respond to in-game events by enabling them to track the player from whom the ball will be received even prior to that player passing the ball.

The direction in which the virtual object is to be passed may be a direction to a non-user player to whom the virtual object is to be passed.

Associating the passing direction with specific non-user players adds context and strategic depth to the gameplay, allowing users to make more informed decisions about their actions.

The second marker may move to track the direction of the non-user player to whom the virtual object is to be passed as that non-user player moves relative to the user player.

This real-time updating of the passing direction accommodates the dynamic nature of the gameplay environment and allows the user to prepare to make the pass in advance based on movement of the target player, supporting more accurate and timely user inputs.

One or both of the first marker and the second marker may lie in a ground plane of the gameplay environment.

Positioning the markers in the ground plane provides a natural and intuitive reference point for users, enhancing spatial awareness and improving the overall gameplay experience without obfuscating other aspects of the gameplay environment such as players or virtual objects that exist above the ground plane.

The method may further comprise providing a position marker disposed above a non-user player to whom the virtual object is to be passed.

This additional marker enhances the user's ability to quickly locate and focus on the intended recipient of the virtual object, facilitating more accurate passing.

The position marker may indicate when the virtual object is to be received at the non-user player to whom the virtual object is to be passed by changing one or more of colour, size, shape, brightness, and transparency.

These visual changes in the position marker provide temporal cues to the user, helping them time their actions more precisely for optimal gameplay performance.

The position marker may provide a visual representation of a countdown to when the virtual object is to be received at the non-user player to whom the virtual object is to be passed.

The visual representation of a countdown may be represented by the change in one or more of colour, size, shape, brightness, and transparency.

This countdown feature adds a precise timing element to the user interface, allowing for more strategic, accurate and well-timed actions within the gameplay. Using visual cues for the countdown enhances its perceptibility.

The method may further comprise providing a target marker around the non-user player to whom the virtual object is to be passed.

The target marker adds an additional layer of visual guidance, clarifying the intended recipient of the virtual object and enabling the user to improve their passing accuracy.

The target marker may comprise a back wall rising vertically from or near a ground plane in the gameplay setting.

This vertical element adds depth to the visual guidance system, making it easier for users to gauge distance and positioning in three-dimensional gameplay environments.

The target marker may move around the non-user player to whom the virtual object is to be passed such that the non-user player to whom the virtual object is to be passed is always positioned between the user player and the back wall.

This dynamic positioning ensures that the non-user player to whom the virtual object is to be passed remains visible and relevant regardless of the relative positions of the user player and the intended recipient, supporting more consistent and accurate gameplay.

The user player, the non-user player to whom the virtual object is to be passed, and the back wall may always be colinear.

Maintaining this colinear relationship simplifies the visual alignment process for the user, potentially improving passing accuracy and reducing cognitive load during gameplay.

The back wall of the target marker may comprise an indication of a preferred target indicating an optimal location for the user player to pass the virtual object to.

This preferred target indication adds a layer of strategic depth to the passing mechanic, enabling users to aim for optimal passing locations and potentially improving overall gameplay quality.

The indication of a preferred target may be represented visually by a change or gradient in one or more of a colour, size, shape, brightness, and transparency of the back wall of the target marker.

These visual cues make the preferred target easily distinguishable, allowing users to quickly identify and aim for the optimal passing location.

The preferred target may be a centre portion of the back wall, wherein the centre portion of the back wall is differentiated from edge portions of the back wall by a change or gradient in one or more of a colour, size, shape, brightness, and transparency of the back wall.

This central positioning of the preferred target aligns with common sports conventions, making the interface more intuitive for users familiar with real-world sports dynamics.

The gameplay environment may be presented from a first person perspective of the user player on the display of the computing device.

The first-person perspective enhances immersion and provides a more realistic gameplay experience, potentially improving user engagement and performance.

A first person view inherently limits the visibility of the gameplay environment and so it is even more crucial to provide a quick, intuitive and informative graphical overlay that can provide information to the user regarding aspects of the gameplay environment that may be outside of the user's field of view.

The gameplay environment may be an association football match.

The virtual object may be a ball.

The computing device may be an extended reality device and the gameplay environment may be an extended reality environment.

Implementing this system in an extended reality environment leverages the immersive capabilities of such technologies, potentially enhancing the overall user experience and the effectiveness of the visual guidance system.

The extended reality setting may be a virtual reality setting and the extended reality device may be a virtual reality device; or the extended reality setting may be a mixed reality setting and the extended reality device may be a mixed reality device.

This flexibility in implementation allows the system to be adapted to various extended reality platforms, maximizing its potential applications and user base.

The plurality of non-user players may be configured to move according to a pre-set pattern and the virtual object may be configured to move on a pre-set path until interacted with by the user player.

This pre-set movement system allows for consistent and predictable gameplay scenarios, which can be beneficial for training purposes or for creating specific challenging situations for users to navigate.

The pre-set pattern of the plurality of non-user players and the pre-set path of the virtual object may correspond to captured real world motion of a corresponding plurality of players and an object in the real world.

Basing the gameplay on real-world data enhances the authenticity of the experience, improving the training value of the system and increasing user engagement.

The captured real world motion may be cleaned prior to being used to generate the pre-set pattern of the plurality of non-user players and the pre-set path of the virtual object.

Cleaning the captured data ensures smoother and more consistent gameplay, reducing potential artefacts or irregularities that could detract from the user experience or inhibit the value as a training aid.

In a second aspect, a hand-foot substation calibration method for use in extended reality environments is provided. The method comprises: instructing a user to position at least one arm in a first position, the first position being a position wherein the at least one arm is positioned straight against the user's side; receiving input from a handheld controller indicating that the at least one arm is in the first position; and calibrating a leg length in the extended reality environment such that when the at least one arm is in the first position a corresponding leg of an avatar of the user in the extended reality environment is in a rest position such that a foot of the corresponding leg is in contact with a ground plane of the extended reality environment.

Instructing the user to position their arm straight against their side provides a natural and easily understood reference point for calibration and provides a calibration process that is quick and straightforward, allowing users to start their extended reality experience with minimal delay and with accurate controls.

Instructing a user to position the at least one arm in the first position may comprise providing a volume within the extended reality environment indicating the first position. The volume may be a sphere.

Providing a volume (such as a sphere) in the extended reality environment to indicate the correct arm position enhances user understanding and improves calibration accuracy.

The method may further comprise providing confirmation to the user when the at least one arm is in the first position. The confirmation may be a visual confirmation in the extended reality environment. The visual confirmation may be a change in colour of the volume.

Offering confirmation, in particular visual confirmation, when the arm is in the correct position allows users to make adjustments quickly and ensures proper calibration.

Receiving input from a handheld controller indicating that the at least one arm is in the first position may comprise receiving an input indicating that a trigger of the handheld controller has been pulled.

Using the handheld controller's trigger as the input mechanism for confirming arm position simplifies the calibration process and leverages existing hardware.

The first position may further specify an orientation of the handheld controller.

Specifying the orientation of the handheld controller in the first position ensures consistent and accurate calibration of the orientation of the virtual avatar's foot for different users and sessions.

In a third aspect, a non-transitory computer-readable storage medium storing instructions is provided. The instructions, when executed by a processor, cause the processor to perform the method of the first or second aspects.

In a fourth aspect, a device for providing a graphical overlay in a gameplay environment is provided. The device comprises: a display; a processor; and a memory storing instructions that, when executed by the processor, cause the processor to perform the method of the first or second aspects.

### BRIEF DESCRIPTION OF FIGURES

Embodiments of the invention will be described, by way of example, with reference to the following drawings, in which:
FIG. 1 illustrates a gameplay environment with a graphical overlay, according to aspects of the present disclosure.
FIG. 2 illustrates the gameplay environment with a plurality of players and directional indicators, according to aspects of the present disclosure.
FIG. 3 illustrates the gameplay environment with a position marker, according to aspects of the present disclosure.
FIG. 4 illustrates the gameplay environment with directional and position markers, according to aspects of the present disclosure.
FIG. 5 illustrates the gameplay environment with a target marker, according to aspects of the present disclosure.
FIG. 6 illustrates the gameplay environment with a directional markers and a target marker, according to aspects of the present disclosure.
FIG. 7 illustrates a first-person view of a gameplay environment with directional markers, according to aspects of the present disclosure.
FIG. 8 depicts another first-person view of the gameplay environment, according to aspects of the present disclosure.
FIG. 9 shows a flowchart of a method for providing a graphical overlay in a gameplay environment, according to aspects of the present disclosure.
FIG. 10 shows a flowchart of a method for hand-foot substitution calibration for use in extended reality environments, according to aspects of the present disclosure.

Common reference numerals are used throughout the figures to indicate similar features.

### DETAILED DESCRIPTION

The present disclosure provides a method and device for enhancing user awareness, interaction and immersion in a gameplay environment, particularly in extended reality (ER) environments such as virtual reality (VR) and mixed reality (MR). The method involves providing a graphical overlay on a display of a computing device to a user in a gameplay environment. The gameplay environment comprises a plurality of non-user players, a user player under the control of the user, and a virtual object that the user player can interact with. The graphical overlay includes a first marker indicating a direction from which a virtual object will be received by a user player in the gameplay environment, and a second marker indicating a direction in which the virtual object is to be passed by the user player in the gameplay environment. This approach offers users intuitive visual guidance on elements of the gameplay environment, overcoming the limitations of a restricted field of view of the gameplay environment particularly inherent in extended reality environments and gameplay environments that utilise a first-person point of view.

In some embodiments, the graphical overlay may include additional markers such as a position marker disposed above a non-user player to whom the virtual object is to be passed, and a target marker around, and a back wall behind, the non-user player to whom the virtual object is to be passed. These additional markers can further enhance the user's ability to quickly assess information about the gameplay environment and provide three dimensional cues to the user enabling them to anticipate and respond to gameplay events, particularly when in a three dimensional gameplay environment and from a first-person point of view when flat or two dimensional overlays become less visible.

The method and device disclosed herein may be particularly beneficial in the context of sports simulation games, where the gameplay environment may be a simulation of a real-world sports match, and the virtual object may be a ball or other sports equipment. The use of real-world player data to guide user actions and provide feedback can enhance the authenticity and immersion of the gameplay experience, potentially improving user engagement and performance in training situations.

In the following sections, various embodiments and aspects of the method and system will be described in greater detail, along with illustrative examples.

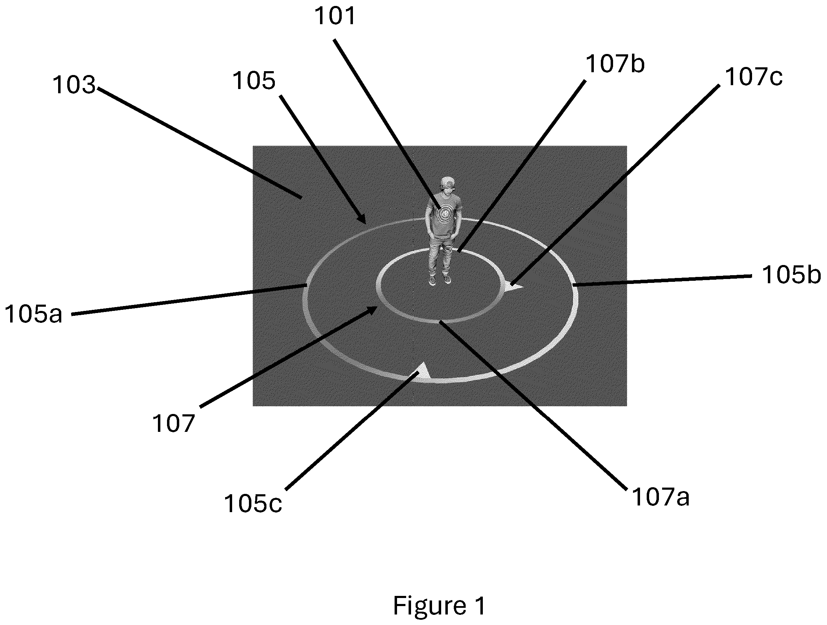

Referring to FIG. 1, a gameplay environment 100 is depicted. In the present case, the gameplay environment is a virtual association football (soccer) environment, though it will be appreciated that other sporting or non-sporting environments may be used. At the centre of the Figure is a user player 101, represented by a human figure. Surrounding the user player 101 are two concentric rings, forming the first and second markers. The first marker comprises a first ring 105 centred on the user player 101. The first ring 105 has an indicator portion that is visually distinguishable from the remainder of the first ring and indicates a direction from which a virtual object 109 will be received by the user player 101 in the gameplay environment 100. This distinction may be based on one or more of a difference in colour, thickness, transparency, and brightness. For instance, as illustrated in FIG. 1, the indicator portion of the first ring 105 is a different colour than the remainder of the ring. Furthermore, the indicator portion of the first ring 105 comprises arrow 105c, pointing inwards towards the user player 101. The interface between the indicator portion of the first ring 105 and the remainder of the first ring may be a gradation in one or more of colour, thickness, transparency, and brightness.

The first ring 105 is broadly divided into two sections, a right hand side 105a and a left hand side 105b, relative to the indicator portion of the first ring. These sides are distinguished from each other by one or more of a difference in colour, thickness, transparency, and brightness, enabling the user to determine the relative position of the indicator portion by looking at any portion of the first ring 105. For example, as illustrated in FIG. 1, the right hand side 105a is a different colour than the left hand side 105b.

The second marker comprises a second ring 107 centred on the user player 101. Similar to the first ring 105, the second ring 107 has an indicator portion that is visually distinguishable from the remainder of the second ring and indicates a direction in which the virtual object 109 is to be passed by the user player 101 in the gameplay environment 100. This distinction may be based on one or more of a difference in colour, thickness, transparency, and brightness. As illustrated in FIG. 1, the indicator portion of the second ring 107 is a different colour than the remainder of the ring. Furthermore, the indicator portion of the second ring 107 comprises arrow 107c, pointing outwards away from the user player 101.

Again, similarly to the first ring 105, the second ring 107 is also divided broadly into two sections, a right hand side 107a and a left hand side 107b, relative to the indicator portion of the second ring 107. These sides are distinguished from each other by one or more of a difference in colour, thickness, transparency, and brightness, enabling the user to determine the relative position of the indicator portion by looking at any portion of the second ring 107. For example, as illustrated in FIG. 1, the right hand side 107a is a different colour than the left hand side 107b.

The graphical overlay formed by the first and second rings 105, 107 provides visual guidance to the user, indicating the direction from which a virtual object will be received and the direction in which the virtual object is to be passed. As seen in FIG. 1, the first ring 105 is concentrically within the second ring 107, or the second ring 107 is concentrically within the first ring 105. This concentric arrangement of the first and second rings 105, 107 provides a clear and intuitive visual guide to the user about the direction from which the virtual object will be received and the direction in which it is to be passed. This overlay enhances the user's awareness and interaction within the gameplay environment 100, particularly in extended reality environments where the field of view may be restricted.

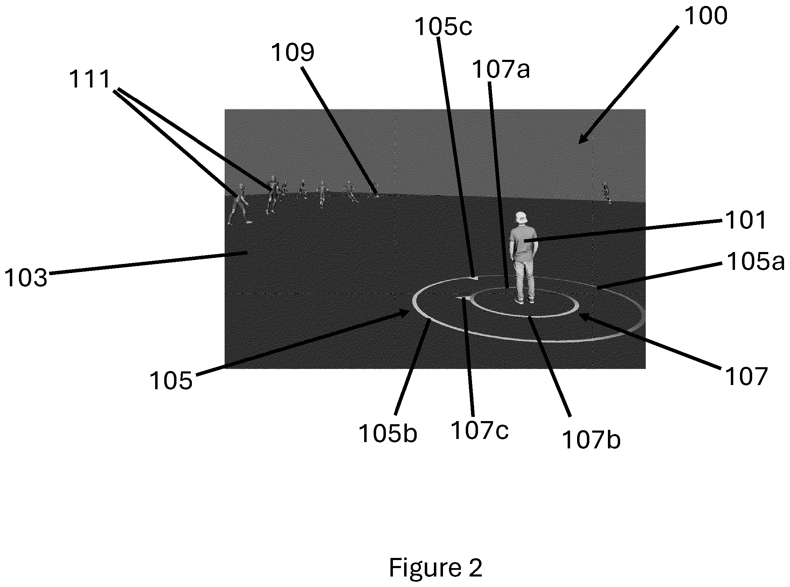

Referring to FIG. 2, the gameplay environment 100 is depicted from a third-person perspective. The user player 101 is represented by a figure standing on the ground plane 103, which represents a sports playing field. As in FIG. 1, surrounding the user player 101 are the first ring 105 and the second ring 107, which form the first and second markers respectively. These rings are divided into sections 105a, 105b, 107a, 107b and feature arrows 105c, 107c pointing in specific directions. The arrows on the rings provide visual guidance to the user player 101, indicating the direction from which a virtual object 109 will be received and the direction in which it is to be passed, as described above with respect to FIG. 1.

In the depicted embodiment, the virtual object 109 is a ball, although in other embodiments, the virtual object may be any other object that the user player 101 can interact with in the gameplay environment 100. The ball 109 is positioned on the ground plane 103, ready to be received and passed by the user player 101 according to the directions indicated by the first and second markers.

Scattered around the field are several non-user players 111, represented by small figures. These non-user players 111 may be part of the user player's team or the opposing team, and their movements and actions in the gameplay environment 100 may be determined by pre-set patterns, which in particular may be based on real-world player data, e.g., captured using motion capture techniques. The non-user players 111 may interact with the virtual object 109 and with the user player 101, providing a dynamic and interactive gameplay environment.

Referring to FIG. 2, the dynamic nature of the gameplay environment 100 is further illustrated. In some aspects, the first marker, which includes the first ring 105 and the first arrow 105c, moves to track the direction of the non-user player from whom the virtual object 109 will be received as that non-user player moves relative to the user player 101. This dynamic tracking of the non-user player enhances the realism and immersion of the gameplay environment 100, providing the user player 101 with real-time visual guidance on the evolving gameplay situation. This feature is particularly beneficial in extended reality environments where the field of view may be restricted, as it provides context to the gameplay situation and the upcoming actions to better enable the user to quickly orientate and prepare themselves in the gameplay environment.

Similarly, the second marker, which includes the second ring 107 and the second arrow 107c, moves to track the direction of the non-user player to whom the virtual object 109 is to be passed as that non-user player moves relative to the user player 101. This dynamic tracking of the non-user player to whom the virtual object 109 is to be passed further enhances the realism and immersion of the gameplay environment 100, providing the user player 101 with real-time visual guidance on the evolving gameplay situation. This feature is particularly beneficial in extended reality environments where the field of view may be restricted, as it provides context to the gameplay situation and the upcoming actions to better enable the user to quickly orientate and prepare themselves in the gameplay environment.

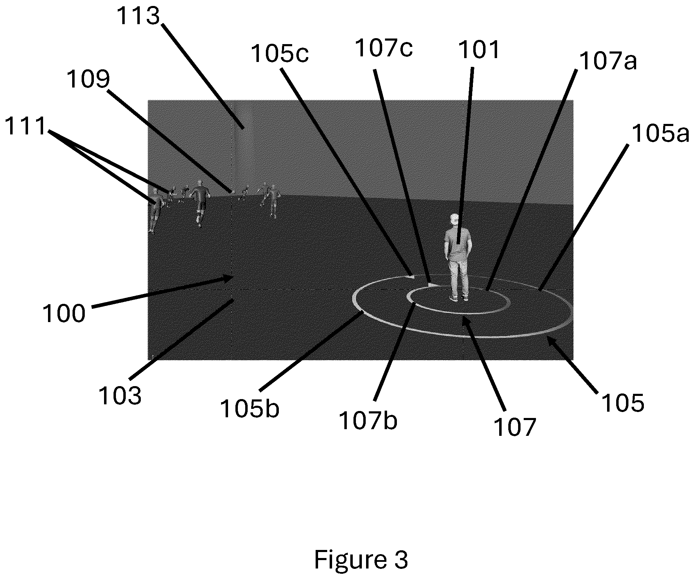

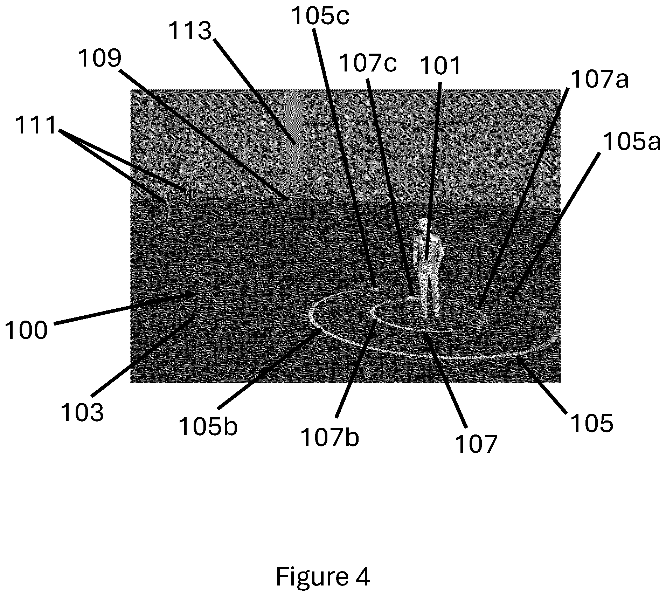

Referring to FIGS. 3 and 4, the same gameplay environment 100 is again depicted from a third-person perspective. FIG. 4 illustrates a development of the gameplay environment 100 as depicted in FIG. 3 after a short period of time has passed. The user player 101 is represented by a figure standing on the ground plane 103, which represents a sports playing field. Surrounding the user player 101 are the first ring 105 and the second ring 107, which form the first and second markers respectively. These rings are divided into sections 105a, 105b, 107a, 107b and feature arrows 105c, 107c pointing in specific directions. The arrows on the rings provide visual guidance to the user player 101, indicating the direction from which a virtual object 109 will be received and the direction in which it is to be passed, as described above with respect to FIG. 1 and FIG. 2.

As illustrated in FIGS. 3 and 4, the graphical overlay may include a position marker 113 disposed above a non-user player 111 to whom the virtual object 109 is to be passed. The position marker 113 may indicate when the virtual object 109 is to be received at the non-user player 111 by changing one or more of colour, size, shape, brightness, and transparency. For instance, as illustrated in FIGS. 3 and 4, the position marker 113 may change from red to green to indicate the optimal time for the virtual object 109 to be received by the non-user player 111.

In some cases, the position marker 113 provides a visual representation of a countdown to when the virtual object 109 is to be received at the non-user player 111. This countdown may be represented by the change in one or more of colour, size, shape, brightness, and transparency of the position marker 113. For example, the position marker 113 may gradually change from red to green as the time for the virtual object 109 to be received by the non-user player 111 approaches, providing the user player 101 with a visual cue of the timing of the pass. Additionally, or alternatively in some cases, the countdown may be visually represented by the height of the position marker 113 decreasing. This feature enhances the user's awareness and interaction within the gameplay environment 100, particularly in extended reality environments where the field of view may be restricted.

The integration of the first and second markers with the position marker collectively provides comprehensive visual guidance to the user player 101 in the gameplay environment 100. This combination of markers helps the user player 101 to anticipate the direction from which the virtual object 109 will be received, the direction in which it is to be passed, and the timing of these actions. This can enhance the user's immersion in the gameplay environment 100 and improve their performance in the game.

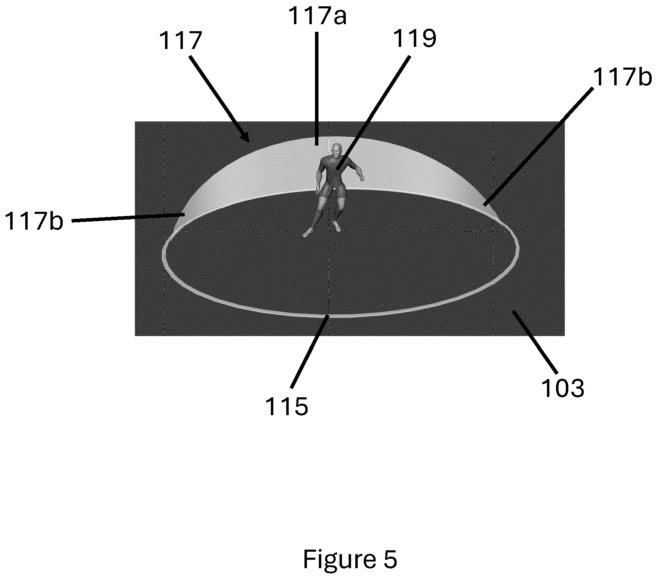

Referring to FIG. 5, the gameplay environment 100 is depicted showing a detailed view of a target marker 115 around a non-user player 119 to whom the virtual object 109 is to be passed. The non-user player 119 is represented by a figure standing on the ground plane 103, which represents a sports playing field.

The target marker 115 may take a number of forms, and as illustrated comprises a ring around the non-user player 119 to whom the virtual object 109 is to be passed and also comprises a back wall 117 rising vertically from the ring at or near the ground plane 103 in the gameplay setting. The back wall 117 of the target marker 115 may comprise an indication of a preferred target indicating an optimal location for the user player 101 to pass the virtual object 109 to. This indication of a preferred target may be represented visually by a change or gradient in one or more of a colour, size, shape, brightness, and transparency of the back wall 117 of the target marker 115. For instance, as illustrated in FIG. 5, the back wall 117 may change from green in the centre portion 117a to yellow on the edges 117b to indicate the optimal location for the user player 101 to pass the virtual object 109 to. This feature enhances the user's awareness and interaction within the gameplay environment 100, particularly in extended reality environments where the field of view may be restricted and in first-person gameplay environments whereby the perspective of a user can obscure details of the gameplay environment.

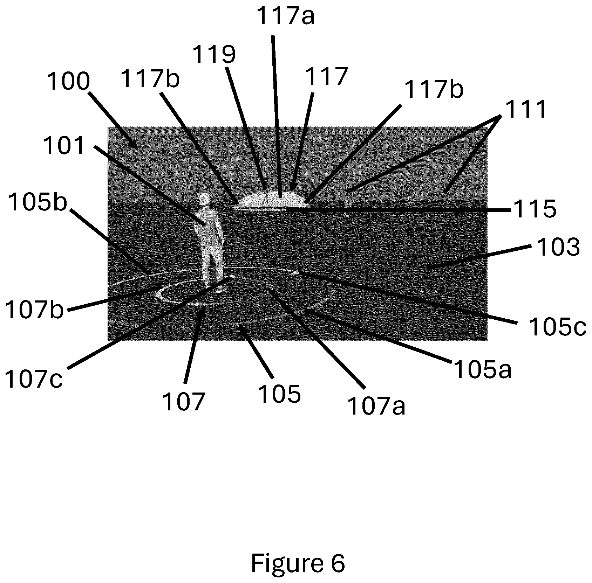

Referring to FIG. 6, the gameplay environment 100 is depicted from a third-person perspective illustrating both the first and second markers 105, 107 and the target marker 115. The user player 101 is represented by a figure standing on the ground plane 103, which represents a sports playing field. Surrounding the user player 101 are the first ring 105 and the second ring 107, which form the first and second markers respectively. These rings are divided into sections 105a, 105b, 107a, 107b and feature arrows 105c, 107c pointing in specific directions. The arrows on the rings provide visual guidance to the user player 101, indicating the direction from which a virtual object 109 will be received and the direction in which it is to be passed, as described above with respect to FIG. 1, FIG. 2, FIG. 3, and FIG. 4.

In addition to the first and second markers, FIG. 6 also illustrates the target marker 115 around a non-user player 119 to whom the virtual object 109 is to be passed. In some aspects, the target marker 115 moves around the non-user player 119 such that the non-user player 119 is always positioned between the user player 101 and the back wall 117. This dynamic tracking of the non-user player 119 to whom the virtual object 109 is to be passed further enhances the clarity of the gameplay environment 100, providing the user player 101 with real-time visual guidance on the evolving gameplay situation. This feature is particularly beneficial in extended reality environments or first-person game environments where the user's field of view may be restricted, as it provides information to the user clearly about the context to the gameplay situation and the upcoming actions to better enable the user to quickly orientate and prepare themselves in the gameplay environment.

Furthermore, the user player 101, the non-user player 119 to whom the virtual object 109 is to be passed, and the back wall 117 may always be colinear. This arrangement ensures that the user always knows the position of the non-user player 119 relative to the back wall 117, further enhancing the user's awareness and understanding within the gameplay environment 100. This feature is particularly beneficial in first-person gameplay environments where the perspective of a user can obscure details of the gameplay environment.

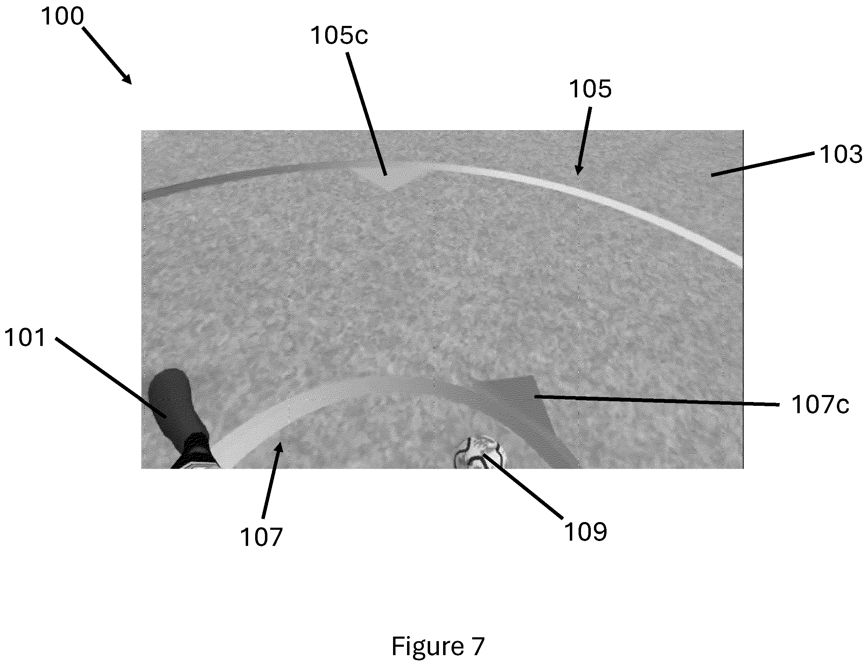

Referring to FIG. 7, the gameplay environment 100 of FIGS. 1 to 6 is depicted from a first-person perspective. The user player 101 is represented by a figure standing on the ground plane 103, which represents a sports playing field. Because of the limited field of view inherent in a first-person perspective, only the user player's foot is currently visible. Surrounding the user player 101 are the first ring 105 and the second ring 107, which form the first and second markers respectively. These rings are divided into sections 105a, 105b, 107a, 107b and feature arrows 105c, 107c pointing in specific directions. The arrows on the rings provide visual guidance to the user player 101, indicating the direction from which the virtual object 109 will be received (or, in the case of FIG. 7 where the user has received the virtual object 109, where the virtual object was received from) and the direction in which it is to be passed, as discussed with respect to the preceding figures.

FIG. 7 illustrates the limitations in the field of view presented to a user in a first-person gameplay environment 100, and highlights how the first and second markers convey important information about the gameplay environment 100 to the user overcoming the limited field of view particularly associated with a first-person gameplay environment 100. As can be seen in FIG. 7, when the user is looking down towards the ground plane 103 in the gameplay environment 100, no other non-user players 111 are visible, including the non-user player 119 to whom the virtual object 109 is to be passed. This makes executing the pass challenging. However, the second ring 107 with arrow 107c provides a clear indicator as to where the user needs to pass the virtual object 109 even when the non-user player 119 to whom the virtual object 109 is to be passed is not in the field of view.

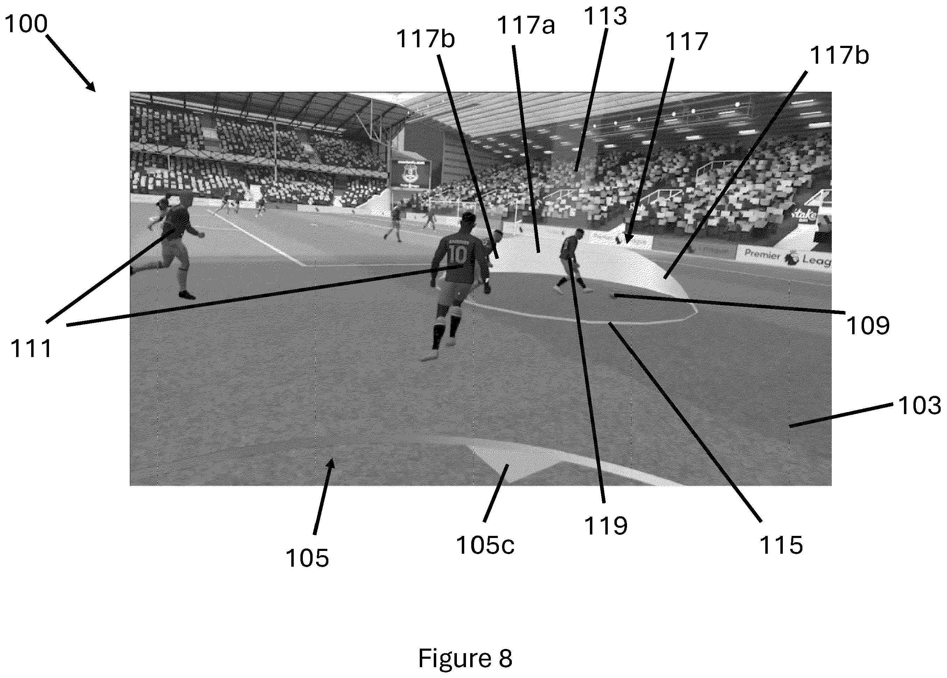

Referring to FIG. 8, the gameplay environment 100 is again depicted from a first-person perspective, though at a different point in time and with the user looking in a different direction to the instance depicted in FIG. 7. In this perspective, the user player 101 is not able to see their own body, such as their feet, nor are they able to see the second ring 107, with only a portion of the first ring 105, including arrow 105c, being in the field of view.

FIG. 8 also illustrates the target marker 115 around a non-user player 119 to whom the virtual object 109 is to be passed. As discussed with respect to FIG. 5 and FIG. 6, the target marker 115 is a ring on the ground plane 103 that surrounds the non-user player 119. This marker provides a visual cue to the user player 101 about the location of the non-user player 119, even when the non-user player 119 may be intermittently obscured or blocked in the user player's field of view, for example by other non-user players 111 moving between the user player 101 and the non-user player 119 to whom the virtual object 109 is to be passed.

Again, as discussed above in relation to FIG. 5 and FIG. 6, target mark 115 comprises back wall 117 rising from the ring on the ground plane 103. This vertical aspect to the target marker helps ensure that the target marker is easily visible to the user, particularly in a first-person view, and as it provides information to the user about the context of the gameplay situation and the upcoming actions to better enable the user to quickly orientate and prepare themselves in the gameplay environment. Additionally, position marker 113 is provided above the non-user player 119 to whom the virtual object is to be passed to further aid in identifying the target player.

Generally, the gameplay environment 100 depicted in FIGS. 1 to 8 is presented on a display of a computing device, which may be an extended reality device such as a virtual reality device or a mixed reality device, or another computing device having a display such as, but not limited to, a mobile terminal, mobile phone, tablet device, laptop or desktop computer, and so on. The display provides a visual representation of the gameplay environment 100, including the ground plane 103, the user player 101, the non-user players 111, the virtual object 109, and the graphical overlays. The display may be part of a head-mounted display worn by the user, or it may be a separate display device such as a monitor or a projector. The display may, in particular, present the gameplay environment 100 from a first-person perspective of the user player 101 as illustrated in FIG. 7 and FIG. 8, enhancing the user's immersion in the gameplay environment and providing a realistic and engaging gameplay experience.

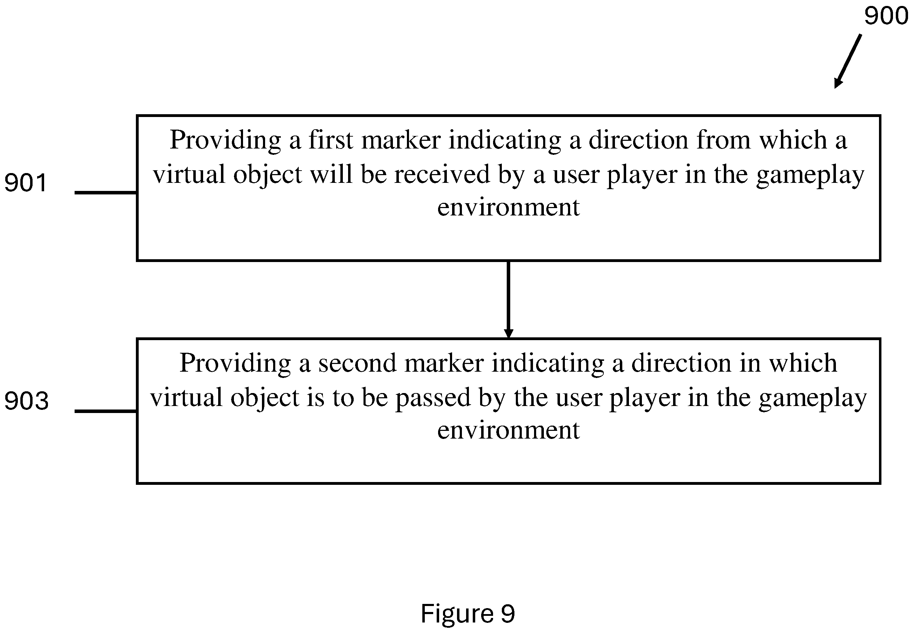

Referring to FIG. 9, a method 900 is depicted that outlines the key steps of providing directional markers in the gameplay environment for receiving and passing a virtual object. The method 900 begins at step 901. This step involves generating a first marker on the display of the computing device, which indicates the direction from which a virtual object, such as a ball in a sports game, will be received by the user player in the gameplay environment. The first marker may be a visual element such as an arrow or a highlighted area, and may be positioned relative to the user player in the gameplay environment. The first marker may be dynamically updated based on the movements of the virtual object and the non-user players in the gameplay environment. For example, the first marker may be ring 105 illustrated in FIGS. 1 to 8.

The method continues at step 903. This step involves generating a second marker on the display of the computing device, which indicates the direction in which the virtual object is to be passed by the user player in the gameplay environment. Similar to the first marker, the second marker may be a visual element such as an arrow or a highlighted area, and may be positioned relative to the user player in the gameplay environment. The second marker may be dynamically updated based on the movements of the virtual object and the non-user players in the gameplay environment. For example, the second marker may be ring 107 illustrated in FIGS. 1 to 8.

The flowchart 900 provides a visual representation of the method of providing a graphical overlay in a gameplay environment, illustrating the sequence of steps involved in providing the first and second markers. This method enhances the user's awareness and interaction within the gameplay environment, particularly in extended reality environments where the field of view may be restricted. By providing clear visual guidance on the direction from which a virtual object will be received and the direction in which it is to be passed, the method can improve the user's performance and engagement in the game.

In some aspects, the computing device used to display the gameplay environment 100 may be an extended reality device. Extended reality is a term that encompasses various forms of immersive technology, including virtual reality (VR) and mixed reality (MR). In a VR environment, the user is completely immersed in a computer-generated world, with all visual input coming from the VR device. In an MR environment, computer-generated elements are overlaid onto the real world, allowing the user to interact with both real and virtual objects.

In some cases, the gameplay environment 100 may be a virtual reality environment and the computing device may be a virtual reality device. In this scenario, the user player 101 is fully immersed in the gameplay environment 100, with all visual and auditory input coming from the VR device. This can enhance the user's sense of presence in the gameplay environment 100, making the game more engaging and realistic.

In other cases, the gameplay environment 100 may be a mixed reality environment and the computing device may be a mixed reality device. In this scenario, the gameplay environment 100 is overlaid onto the user's real-world environment, allowing the user to interact with both real and virtual objects. This can provide a unique gameplay experience, blending the boundaries between the real world and the game world, and may be particularly beneficial for training exercises.

In the gameplay environment 100, the plurality of non-user players 111 may be configured to move according to a pre-set pattern and the virtual object 109 is configured to move on a pre-set path until interacted with by the user player 101. These pre-set patterns and paths may correspond to captured real-world motion of a corresponding plurality of players and an object in the real world. This real-world motion data can be captured using various techniques, such as motion capture technology, video analysis, or other data collection methods.

Before being used to generate the pre-set patterns and paths, the captured real-world motion data may be cleaned. This cleaning process may involve removing noise or errors from the data, interpolating missing data points, smoothing the data, or other data processing techniques. The cleaned real-world motion data can then be used to generate the pre-set patterns of the non-user players 111 and the pre-set path of the virtual object 109, providing an authentic and realistic gameplay experience. This use of real-world motion data can enhance the realism and immersion of the gameplay environment 100, making the user feel like they are part of an actual sports match. It may further be beneficial in generating training exercises for a user that are based on real world events.

In some aspects, after the user player 101 has passed the virtual object 109 in the gameplay environment 100, the method may involve determining an accuracy of the pass compared to a corresponding real-world pass captured in the real-world motion data. This determination of pass accuracy may involve comparing one or more of the timing, direction, power, and motion of the virtual object 109 in the gameplay environment 100 to the corresponding real-world pass captured in the real-world motion data. For instance, the timing of the pass may be compared by determining the time at which the user player 101 passes the virtual object 109 and comparing this to the time at which the corresponding real-world player passed the object in the real-world data. Similarly, the direction of the pass may be compared by determining the direction in which the user player 101 passes the virtual object 109 and comparing this to the direction of the corresponding real-world pass. The power of the pass may be compared by determining the speed or force with which the user player 101 passes the virtual object 109 and comparing this to the speed or force of the corresponding real-world pass. The motion of the pass may be compared by determining the trajectory or path of the virtual object 109 after being passed by the user player 101 and comparing this to the trajectory or path of the object in the corresponding real-world pass.

In some cases, the method may further involve providing feedback to the user player 101 based on the comparison of the virtual pass to the real-world pass. This feedback may be provided in various forms, such as visual cues, auditory cues, haptic feedback, or a combination thereof. For example, the feedback may be a visual indicator on the display of the computing device that changes colour or shape based on the accuracy of the pass. Alternatively, or additionally, the feedback may be an auditory cue, such as a sound or voice feedback, that indicates the accuracy of the pass. In some aspects, the feedback may be haptic feedback provided through a controller or other input device held or worn by the user player 101. The haptic feedback may vary in intensity or pattern based on the accuracy of the pass, providing a tactile indication to the user player 101 of their performance.

In some embodiments, the method may further involve displaying a visual representation of differences between the pass in the gameplay environment 100 and the corresponding real-world pass captured in the real-world motion data. This visual representation may be a graphical overlay on the display of the computing device, such as a line or arrow indicating the direction of the pass, a circle or other shape indicating the location of the pass, or a colour or brightness change indicating the timing or power of the pass. The visual representation may be overlaid on the gameplay environment 100, providing the user player 101 with a clear and intuitive visual guide to their performance.

In some aspects, the method may be implemented by a non-transitory computer-readable storage medium storing instructions that, when executed by a processor, cause the processor to perform the steps of the method. The non-transitory computer-readable storage medium may be any type of storage medium capable of storing computer-readable instructions, such as a hard drive, solid state drive, flash memory, optical disc, magnetic tape, or other type of storage medium. The processor may be any type of processor capable of executing the instructions, such as a central processing unit (CPU), a graphics processing unit (GPU), a microprocessor, a microcontroller, or other type of processor. The instructions may be written in any type of computer programming language, such as C++, Java, Python, or other programming language. The instructions may be executed by the processor to perform the steps of the method, providing the user player 101 with an immersive and engaging gameplay experience.

In some aspects, the computing device used to display the gameplay environment 100 may include a processor and a memory. The processor may be configured to execute instructions stored in the memory, which may include instructions for generating the gameplay environment 100, the graphical overlays, and the virtual object 109, as well as instructions for processing user inputs and providing feedback to the user. The memory may be any type of computer-readable storage medium, such as a hard drive, solid state drive, flash memory, or other type of storage medium. The processor may be any type of processor capable of executing the instructions, such as a central processing unit (CPU), a graphics processing unit (GPU), a microprocessor, a microcontroller, or other type of processor.

In some cases, the gameplay environment 100 may be adapted for various sports beyond association football. For example, the gameplay environment 100 may be a simulation of an American football match, a basketball match, a rugby match, a cricket match, a tennis match, or any other type of sports match. The virtual object 109 may be a ball or other sports equipment appropriate for the particular sport. The non-user players 111 may be configured to move according to pre-set patterns corresponding to real-world player movements in the particular sport, and the virtual object 109 may be configured to move on a pre-set path corresponding to real-world object movements in the particular sport. This adaptability of the gameplay environment 100 to various sports can enhance the versatility and appeal of the game, potentially attracting a wider range of users with different sports interests.

In some aspects, the game may support multiplayer modes, allowing friends to spectate from the stands of the sports ground. This spectator functionality can enhance the social aspect of the game, allowing users to share their gameplay experiences with their friends. The spectators may be represented in the gameplay environment 100 as additional non-user players, and their movements and actions may be determined by pre-set patterns or by user inputs. The spectators may also be able to interact with the user player 101 and the virtual object 109, providing a dynamic and interactive gameplay environment.

In some aspects, the gameplay system may incorporate additional features to enhance the user's experience and engagement. For instance, the system may integrate haptic feedback mechanisms to guide players. Haptic feedback, or tactile feedback, involves the use of vibrations or other tactile sensations to provide information to the user. In the context of the gameplay environment 100, haptic feedback may be used to indicate when the user player 101 has received the virtual object 109, when the virtual object 109 should be passed, or how accurately the user player 101 has replicated the real-world play. This feedback may be provided through a controller or other input device held or worn by the user player 101, enhancing the user's immersion in the gameplay environment 100 and providing a tactile indication of their performance.

In addition to or instead of haptic feedback, the gameplay system may also use sound cues to guide players. These sound cues may be auditory signals that provide information to the user player 101 about the gameplay environment 100. For example, a sound cue may indicate when the virtual object 109 is approaching the user player 101, when the virtual object 109 should be passed, or how accurately the user player 101 has replicated the real-world play. These sound cues may be provided through speakers or headphones connected to the computing device, enhancing the user's awareness of the gameplay environment 100 and providing an auditory indication of their performance.

The gameplay system may be designed to be adaptable across various platforms. For instance, the game mechanic may be utilized in extended reality (ER) environments including virtual reality (VR) environments and mixed reality (MR) environments, spatial computing environments, and traditional computing and console environments. This broad adaptability can enhance the versatility of the game, allowing it to be played on a wide range of devices and platforms. This can potentially attract a wider range of users with different hardware preferences and capabilities.

To enable accurate control of the user player's foot, especially in an ER environment, various techniques can be used including one or more controllers attached to the user's foot, motion capture techniques to track the user's real world movement, and traditional controller or keyboard and mouse inputs. However, one of the most common input devices associated with ER gameplay systems are handheld controllers, and so advantageously a method of accurately controlling the user player's foot using a handheld controller is provided.

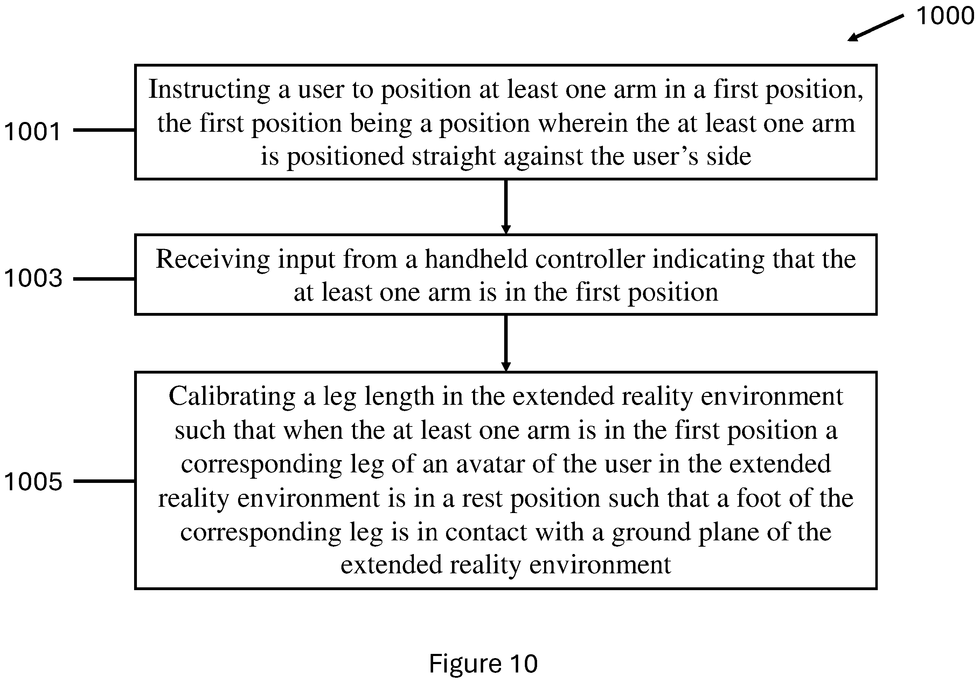

Referring to FIG. 10, a flowchart 1000 is depicted of a hand-foot substitution calibration method for use in extended reality environments. The method begins at step 1001, which involves instructing a user to position at least one arm in a first position. The first position is defined as a position wherein the at least one arm is positioned straight against the user's side. This instruction may be provided visually, audibly, or through other means, and may be presented to the user through the display of the computing device or through other output devices.

The method continues at step 1003, which involves receiving input from a handheld controller indicating that the at least one arm is in the first position. The handheld controller may be a device held by the user that is capable of detecting the position and orientation of the user's hand. The input may be a signal generated by the handheld controller when the user's arm is in the first position. This signal may be transmitted to the computing device, by wired or wireless means, which processes the signal to determine that the user's arm is in the first position.

The method concludes at step 1005, which involves calibrating a leg length in the extended reality environment such that when the at least one arm is in the first position, a corresponding leg of an avatar of the user in the extended reality environment is in a rest position such that a foot of the corresponding leg is in contact with a ground plane of the extended reality environment (i.e., the user player is standing straight and upright in the extended reality environment). This ensures that when the user's arm is in the first position, the foot of the user's avatar is in contact with the ground plane of the extended reality environment, simulating the natural position of a human leg when standing upright.

This hand-foot substitution calibration method provides a novel solution to the challenge of simulating foot movements in extended reality environments, where current technology may not support accurate foot tracking. By using the user's hands to simulate foot movements, the method allows for more realistic and immersive gameplay experiences in extended reality environments.

In some aspects, the method may further involve taking the user through a series of exercises that ease the user into using the hand-foot substitution mechanic. These exercises may involve various actions such as stopping a moving ball, bringing a ball out of the air, striking the ball, and passing the ball. These exercises can help the user to learn how to control the virtual object using their hands, and can improve the user's performance in the game.

In some cases, the hand-foot substitution calibration includes a 'dead man's switch' mechanism. This mechanism operates such that if the user releases the trigger of the handheld controller, the foot of the user's avatar returns to a standard position. Optionally, the user can recalibrate the foot position at any time by selecting a recalibration option, providing flexibility and adaptability in the gameplay experience.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein.

Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

Particular aspects of the invention are set out in the following numbered clauses:
Clause 1. A method of providing a graphical overlay, on a display of a computing device, to a user in a gameplay environment comprising a plurality of non-user players, a user player under the control of the user, and a virtual object that the user player can interact with, the method comprising: providing, on the display of the computing device, a first marker indicating a direction from which a virtual object will be received by a user player in the gameplay environment; and providing, on the display of the computing device, a second marker indicating a direction in which virtual object is to be passed by the user player in the gameplay environment.
Clause 2. The method of any preceding clause, wherein the first marker comprises a first arrow to indicate a direction from which the virtual object will be received.
Clause 3. The method of clause 2, wherein the first arrow points inwards towards the user player from the direction in which the virtual object will be received; or wherein the first arrow points outwards from the user player to the direction in which the virtual object will be received.
Clause 4. The method of any preceding clause, wherein the second marker comprises a second arrow to indicate a direction from which the virtual object will be received.
Clause 5. The method of clause 4, wherein the second arrow points inwards towards the user player in the direction in which the virtual object is to be passed; or wherein the second arrow points outwards from the user player in the direction in which the virtual object is to be passed.
Clause 6. The method of any preceding clause, wherein the first marker comprises a first ring centred on the user player, the first ring having an indicator portion to indicate a direction from which the virtual object is to be received, the indicator portion being visually distinguishable from the remainder of the first ring.
Clause 7. The method of clause 6, wherein the indicator portion of the first ring is visually distinguishable from the remainder of the first ring based on one or more of a difference in colour, thickness, transparency, and brightness.
Clause 8. The method of clause 7, wherein an interface between the indicator portion of the first ring and the remainder of the first ring is a gradation in one or more of colour, thickness, transparency, and brightness.
Clause 9. The method of any of clauses 6 to 8, wherein a left hand side of the first ring relative to the indicator portion of the first ring is distinguished from a right hand side of the first ring relative to the indicator portion of the first ring by one or more of a difference in colour, thickness, transparency, and brightness between the left hand side and the right hand side.
Clause 10. The method of any preceding clause, wherein the second marker comprises a second ring centred on the user player, the second ring having an indicator portion to indicate a direction in which the virtual object is to be passed, the indicator portion being visually distinguishable from the remainder of the second ring.
Clause 11. The method of clause 10, wherein the indicator portion of the second ring is visually distinguishable from the remainder of the second ring based on one or more of a difference in colour, thickness, transparency, and brightness.
Clause 12. The method of clause 11, wherein an interface between the indicator portion of the second ring and the remainder of the second ring is a gradation in one or more of colour, thickness, transparency, and brightness.
Clause 13. The method of any of clauses 10 to 12, wherein a left hand side of the second ring relative to the indicator portion of the second ring is distinguished from a right hand side of the second ring relative to the indicator portion of the second ring by one or more of a difference in colour, thickness, transparency, and brightness between the left hand side and the right hand side.
Clause 14. The method of any of clauses 10 to 13, when dependent on clause 6, wherein the first ring is concentrically within the second ring, or wherein the second ring is concentrically within the first ring.
Clause 15. The method of any preceding clause, wherein the direction from which a virtual object will be received is a direction to a non-user player from whom the virtual object will be received.
Clause 16. The method of clause 15, wherein the first marker moves to track the direction of the non-user player from whom the virtual object will be received as that non-user player moves relative to the user player.
Clause 17. The method of any preceding clause, wherein the direction in which the virtual object is to be passed is a direction to a non-user player to whom the virtual object is to be passed.
Clause 18. The method of clause 17, wherein the second marker moves to track the direction of the non-user player to whom the virtual object is to be passed as that non-user player moves relative to the user player.
Clause 19. The method of any preceding clause wherein one or both of the first marker and the second marker lie in a ground plane of the gameplay environment.
Clause 20. The method of any preceding clause, further comprising providing a position marker disposed above a non-user player to whom the virtual object is to be passed.
Clause 21. The method of clause 20, wherein the position marker indicates when the virtual object is to be received at the non-user player to whom the virtual object is to be passed by changing one or more of colour, size, shape, brightness, and transparency.
Clause 22. The method of clause 21, wherein the position marker provides a visual representation of a countdown to when the virtual object is to be received at the non-user player to whom the virtual object is to be passed.
Clause 23. The method of clause 22, wherein the visual representation of a countdown is represented by the change in one or more of colour, size, shape, brightness, and transparency.
Clause 24. The method of any preceding clause, further comprising providing a target marker around the non-user player to whom the virtual object is to be passed.
Clause 25. The method of clause 24, wherein the target marker comprises a back wall rising vertically from or near a ground plane in the gameplay setting.
Clause 26. The method of clause 25, wherein the target marker moves around the non-user player to whom the virtual object is to be passed such that the non-user player to whom the virtual object is to be passed is always positioned between the user player and the back wall.
Clause 27. The method of clause 26, wherein the user player, the non-user player to whom the virtual object is to be passed, and the back wall are always colinear.
Clause 28. The method of any of clauses 25 to 27, wherein the back wall of the target marker comprises an indication of a preferred target indicating an optimal location for the user player to pass the virtual object to.
Clause 29. The method of clause 28, wherein indication of a preferred target is represented visually by a change or gradient in one or more of a colour, size, shape, brightness, and transparency of the back wall of the target marker.
Clause 30. The method of clause 29, wherein the preferred target is a centre portion of the back wall, wherein the centre portion of the back wall is differentiated from edge portions of the back wall by a change or gradient in one or more of a colour, size, shape, brightness, and transparency of the back wall.
Clause 31. The method of any preceding clause, wherein the gameplay environment is presented from a first person perspective of the user player on the display of the computing device.
Clause 32. The method of any preceding clause, wherein the gameplay environment is an association football match, an American football match, a basketball match, a rugby match, a cricket match, or a tennis match.
Clause 33. The method of any preceding clause, wherein the virtual object is a ball.
Clause 34. The method of any preceding clause, wherein the computing device is an extended reality device and wherein the gameplay environment is an extended reality environment.
Clause 35. The method of clause 34, wherein the extended reality environment is a virtual reality environment and the extended reality device is a virtual reality device; or wherein the extended reality environment is a mixed reality environment and the extended reality device is a mixed reality device.
Clause 36. The method of any preceding clause, wherein the plurality of non-user players are configured to move according to a pre-set pattern and the virtual object is configured to move on a pre-set path until interacted with by the user player.
Clause 37. The method of clause 36, wherein the pre-set pattern of the plurality of non-user players and the pre-set path of the virtual object correspond to captured real world motion of a corresponding plurality of players and an object in the real world.
Clause 38. The method of clause 37, wherein the captured real world motion is cleaned prior to being used to generate the pre-set pattern of the plurality of non-user players and the pre-set path of the virtual object.
Clause 39. The method of clause 37 or 38, further comprising, after the user has passed the virtual object in the gameplay environment, determining an accuracy of the pass compared to a corresponding real world pass captured in the real world motion data.
Clause 40. The method of clause 39, wherein determining an accuracy of the pass comprises comparing one or more of the timing, direction, power, and motion of the virtual object in the gameplay environment to the corresponding real world pass captured in the real world motion data.
Clause 41. The method of clause 39 or 40, further comprising providing feedback to the user based on the comparison.
Clause 42. The method of any of clauses 39 to 41, further comprising displaying a visual representation of differences between the pass in the gameplay environment and the corresponding real world pass captured in the real world motion data.
Clause 43. A hand-foot substation calibration method for use in extended reality environments, the method comprising: instructing a user to position at least one arm in a first position, the first position being a position wherein the at least one arm is positioned straight against the user's side; receiving input from a handheld controller indicating that the at least one arm is in the first position; and calibrating a leg length in the extended reality environment such that when the at least one arm is in the first position a corresponding leg of an avatar of the user in the extended reality environment is in a rest position such that a foot of the corresponding leg is in contact with a ground plane of the extended reality environment.
Clause 44. The method of clause 43, wherein instructing a user to position the at least one arm in the first position comprises providing a volume within the extended reality environment indicating the first position.
Clause 45. The method of clause 44, wherein the volume is a sphere.
Clause 46. The method of clause 44 or 45, wherein the method further comprises providing confirmation to the user when the at least one arm is in the first position.
Clause 47. The method of clause 46, wherein the confirmation is a visual confirmation in the extended reality environment.
Clause 48. The method of clause 47, wherein the visual confirmation is a change in colour of the volume.
Clause 49. The method of any of clauses 43 to 48, wherein receiving input from a handheld controller indicating that the at least one arm is in the first position comprises receiving an input indicating that a trigger of the handheld controller has been pulled.
Clause 50. The method of any of clauses 43 to 49, wherein the first position further specifies an orientation of the handheld controller.
Clause 51. A non-transitory computer-readable storage medium storing instructions that, when executed by a processor, cause the processor to perform the method of any preceding clause.
Clause 52. A computer program comprising instructions that, when executed by a processor, cause the processor to perform the method of any preceding clause.
Clause 53. A device for providing a graphical overlay in a gameplay environment, the device comprising: a display; a processor; and a memory storing instructions that, when executed by the processor, cause the processor to perform the method of any of clauses 1 to 50.

## Claims

1. A method of providing a graphical overlay, on a display of a computing device, to a user in a gameplay environment comprising a plurality of non-user players, a user player under the control of the user, and a virtual object that the user player can interact with, the method comprising:
providing, on the display of the computing device, a first marker indicating a direction from which a virtual object will be received by a user player in the gameplay environment; and
providing, on the display of the computing device, a second marker indicating a direction in which virtual object is to be passed by the user player in the gameplay environment.

2. The method of any preceding claim, wherein the first marker comprises a first arrow to indicate a direction from which the virtual object will be received; and
wherein the first arrow points inwards towards the user player from the direction in which the virtual object will be received; or
wherein the first arrow points outwards from the user player to the direction in which the virtual object will be received.

3. The method of any preceding claim, wherein the second marker comprises a second arrow to indicate a direction from which the virtual object will be received; and
wherein the second arrow points inwards towards the user player in the direction in which the virtual object is to be passed; or
wherein the second arrow points outwards from the user player in the direction in which the virtual object is to be passed.

4. The method of any preceding claim, wherein the first marker comprises a first ring centred on the user player, the first ring having an indicator portion to indicate a direction from which the virtual object is to be received, the indicator portion being visually distinguishable from the remainder of the first ring;
wherein optionally a left hand side of the first ring relative to the indicator portion of the first ring is distinguished from a right hand side of the first ring relative to the indicator portion of the first ring by one or more of a difference in colour, thickness, transparency, and brightness between the left hand side and the right hand side.

5. The method of any preceding claim, wherein the second marker comprises a second ring centred on the user player, the second ring having an indicator portion to indicate a direction in which the virtual object is to be passed, the indicator portion being visually distinguishable from the remainder of the second ring;
wherein optionally a left hand side of the second ring relative to the indicator portion of the second ring is distinguished from a right hand side of the second ring relative to the indicator portion of the second ring by one or more of a difference in colour, thickness, transparency, and brightness between the left hand side and the right hand side.

6. The method of any preceding claim, further comprising providing a position marker disposed above a non-user player to whom the virtual object is to be passed.

7. The method of claim 6, wherein the position marker indicates when the virtual object is to be received at the non-user player to whom the virtual object is to be passed by changing one or more of colour, size, shape, brightness, and transparency;
wherein optionally the position marker provides a visual representation of a countdown to when the virtual object is to be received at the non-user player to whom the virtual object is to be passed.

8. The method of any preceding claim, further comprising providing a target marker around the non-user player to whom the virtual object is to be passed.

9. The method of claim 8, wherein the target marker comprises a back wall rising vertically from or near a ground plane in the gameplay setting;
wherein optionally the target marker moves around the non-user player to whom the virtual object is to be passed such that the non-user player to whom the virtual object is to be passed is always positioned between the user player and the back wall.

10. The method of any preceding claim, wherein the gameplay environment is presented from a first person perspective of the user player on the display of the computing device.

11. The method of any preceding claim, wherein the plurality of non-user players are configured to move according to a pre-set pattern and the virtual object is configured to move on a pre-set path until interacted with by the user player; wherein the pre-set pattern of the plurality of non-user players and the pre-set path of the virtual object correspond to captured real world motion of a corresponding plurality of players and an object in the real world.

12. The method of claim 11, wherein the captured real world motion is cleaned prior to being used to generate the pre-set pattern of the plurality of non-user players and the pre-set path of the virtual object.

13. The method of claim 11 or 12, further comprising, after the user has passed the virtual object in the gameplay environment, determining an accuracy of the pass compared to a corresponding real world pass captured in the real world motion data.

14. A non-transitory computer-readable storage medium storing instructions that, when executed by a processor, cause the processor to perform the method of any preceding claim.

15. A device for providing a graphical overlay in a gameplay environment, the device comprising:
a display;
a processor; and
a memory storing instructions that, when executed by the processor, cause the processor to perform the method of any of claims 1 to 13.
